(19) Europäisches Patentamt / European Patent Office / Office européen des brevets

(11) **EP 3 444 939 B1**

(12) **EUROPÄISCHE PATENTSCHRIFT**

(45) Veröffentlichungstag und Bekanntmachung des Hinweises auf die Patenterteilung:
**02.12.2020  Patentblatt 2020/49**

(21) Anmeldenummer: **17186839.1**

(22) Anmeldetag: **18.08.2017**

(51) Int Cl.:
**F03D 7/02** *(2006.01)*         **G05F 1/10** *(2006.01)*
**H02P 9/02** *(2006.01)*

(54) **VERFAHREN ZUR STEUERUNG EINER WINDENERGIEANLAGE**

METHOD FOR CONTROLLING A WIND TURBINE

PROCÉDÉ DE COMMANDE D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.02.2019  Patentblatt 2019/08**

(73) Patentinhaber: **Nordex Energy GmbH**
**22419 Hamburg (DE)**

(72) Erfinder:
• **De Rijcke, Simon**
  **22419 Hamburg (DE)**
• **Hamann, Niels**
  **22297 Hamburg (DE)**
• **Wessels, Christian**
  **20357 Hamburg (DE)**

(74) Vertreter: **Hauck Patentanwaltspartnerschaft mbB**
**Postfach 11 31 53**
**20431 Hamburg (DE)**

(56) Entgegenhaltungen:
DE-A1-102009 014 012      DE-A1-102012 224 067
DE-A1-102015 208 554

**Beschreibung**

Die vorliegende Erfindung betrifft ein Verfahren zur Steuerung einer Windenergieanlage, bei dem eine in ein elektrisches Versorgungsnetz eingespeiste elektrische Leistung in einem Boost-Betrieb über eine generatorische Verzögerung des Generators erhöht ist.

Die vorliegende Erfindung betrifft die Steuerung der Windenergieanlage für eine als "Virtual Inertia" bezeichnete Betriebsweise. Dabei wird aus Gründen der Netzstützung kurzfristig eine überhöhte Leistung, insbesondere Wirkleistung, in das elektrische Versorgungsnetz eingespeist. Die Windenergieanlage emuliert dabei eine Unterfrequenzantwort von konventionellen Synchrongeneratoren. Aus Sicht der Energiebilanz wird für die Einspeisung des überhöhten Leistungswertes die in der drehenden Masse der Windenergieanlage gespeicherte Rotationsenergie über den Generator kurzfristig und kurzzeitig in elektrische Leistung umgewandelt und in das elektrische Versorgungsnetz eingespeist. Dieser Vorgang führt dazu, dass in einem Boost-Betrieb mehr elektrische Leistung in das Versorgungsnetz eingespeist wird als an mechanischer Leistung aus dem Wind aufgenommen wird und kurzfristig aufgenommen werden kann. Dies führt zu einer Abnahme der Drehzahl und, damit verbunden, der gespeicherten Rotationsenergie. Am Ende der Boost-Phase befindet sich die Windenergieanlage bezogen auf Drehzahl und Drehmoment in einem Betriebspunkt, der nicht für den Dauerbetrieb vorgesehen ist. In einer Wiederherstellungsphase wird die Windenergieanlage dann wieder in einen Betriebspunkt überführt, in dem Drehzahl und Drehmoment in einem vorbestimmten, für die Aufnahme von Leistung aus dem Wind optimalen Verhältnis stehen und die Windenergieanlage dauerhaft betrieben werden kann. Verfahren und Vorgehensweise für Virtual Inertia sind steuerungstechnisch schwierig durchzuführen.

Aus EP 2 532 888 A1 ist eine Steuerungsanordnung für einen Virtual Inertia-Betrieb an einer Windenergieanlage bekannt, bei dem über einen Zweipunkt-Controller (bang-bang controller) die Leistungserzeugung mit einer zusätzlich erhöhten Leistung erfolgt.

Aus DE 10 2015 208 554 A1 ist ein Verfahren zum Betrieb einer Windenergieanlage bekannt, wobei nach einem ersten Betriebszustand, einer ersten Leistungsabgabe und einer ersten Drehzahl in einen zweiten Betriebszustand mit einer zweiten Leistungsabgabe und einer zweiten Drehzahl gesteuert wird. Zum Steuern in den zweiten Betriebszustand wird die zum Einspeisen verfügbare aerodynamische Leistung bestimmt, die die einzustellende Soll-Drehzahl vorgibt.

Aus DE 10 2012 224 067 A1 ist ein Verfahren zum Regeln des elektrischen Moments einer Windenergieanlage bei einem Netzfehler bekannt geworden. Es wird, ansprechend auf einen Spannungsabfall ein Momentenregler aktiviert, der ein Ziel für das elektrische Moment der Windenergieanlage ermittelt. Eine Momentenrampe wird initialisiert und der Zielwert des Momentenreglers mit dem der Momentenrampe verglichen und der kleinere wird als Momentensollwert ausgewählt.

Aus DE 2009 014 012 A1 ist ein Verfahren zum Betrieb einer Windenergieanlage bekannt, bei dem die vom Generator der Windenergieanlage an das Netz abgegebene Leistung kurzfristig und für einen kurzen Zeitraum über die aktuelle Leistung der Windenergieanlage angehoben wird, wenn die Netzfrequenz des elektrischen Netzes um einen vorbestimmten Frequenzwert unterhalb der gewünschten Soll-Frequenz des Netzes liegt.

Der Erfindung liegt die Aufgabe zugrunde, ein Verfahren zum Betrieb einer Windenergieanlage bereitzustellen, das mit einfachen Mitteln eine zuverlässige Steuerung des Betriebs während und nach einem Bereitstellen einer erhöhten elektrischen Leistung gestattet.

Erfindungsgemäß wird die Aufgabe durch ein Verfahren mit den Merkmalen aus Patentanspruch 1 gelöst. Vorteilhafte Ausgestaltungen bilden die Gegenstände der Unteransprüche.

Das erfindungsgemäße Verfahren ist vorgesehen zur Steuerung einer mit einem über einen Umrichter gesteuerten Generator ausgestattete Windenergieanlage. Die Windenergieanlage kennt einen Boost-Betrieb, in dem eine in ein elektrisches Versorgungsnetz eingespeiste elektrische Leistung über eine generatorische Verzögerung des Generators erhöht wird. Im Boost-Betrieb wird eine erhöhte Leistung in das elektrische Versorgungsnetz eingespeist, die aus einer generatorischen Verzögerung der Windenergieanlage stammt. Durch die generatorische Verzögerung wird die in den drehenden Teilen gespeicherte Rotationsenergie in elektrische Leistung gewandelt. Das Betriebsverfahren sieht vor, dass abhängig von einem Istwert der Drehzahl ein Sollwert für ein Generatormoment ermittelt wird. Hierbei handelt es sich um eine drehzahlabhängige Momentensteuerung. Bei dem Verfahren wird der ermittelte Sollwert für das Generatormoment über eine Begrenzer mit vorgebbarer oberer und unterer Grenze an einen Umrichter angelegt. Tritt ein Boost-Signal auf, wird ein Sollwert für das Generatormoment im Boost-Betrieb bestimmt. Im Boost-Betrieb ist dabei ein Istwert der eingespeisten Leistung gegenüber dem Wert vor dem Auslösen des Boost-Betriebs erhöht. Zum Ende des Boost-Betriebs hin wird ein Wiederherstellungssignal gesetzt, das ein Zurückführen der Windenergieanlage in einen stabilen und für den Dauerbetrieb geeigneten Zustand einleitet. Erfindungsgemäß wird für den Wiederherstellungsbetrieb, ansprechend auf das Wiederherstellungssignal, eine zeitliche Änderung des Sollwerts für das Generatormoment begrenzt. Ein Wiederherstellungssignal muss nicht notwendig in Form eines Flag-Bits vorliegen, sondern auch in der Überprüfung von Auslösebedingungen für einen Wiederherstellungsbetrieb bestehen. Bei einem solchen Wiederherstellungsbetrieb ist die Geschwindigkeit, mit der das Generatormoment geändert wird, begrenzt. Hierdurch wird eine stetige und besser kontrollierbare Zurückführung in einen stabilen und für den Dauerbetrieb geeigneten Betriebszustand erreicht und zu starke Schwankungen in der Wiederherstellungsphase vermieden.

In einer bevorzugten Weiterbildung des erfindungsgemäßen Verfahrens werden bei gesetztem Wiederherstellungssignal obere und untere Grenze für das Generatormoment so vorgegeben, dass die Windenergieanlage bei Erreichen einer dieser Grenzen sich wieder in einem regulären Zustand befindet.

In einer weiteren bevorzugten Ausgestaltung wird bei gesetztem Wiederherstellungssignal die maximal zulässige zeitliche Änderung des Sollwerts für das Generatormoment, abhängig von der zeitlichen Änderung der Drehzahl bestimmt. Die zeitliche Änderung der Drehzahl gibt dabei die zeitliche Änderung des Generatormoments vor.

Alternativ zur Berücksichtigung der zeitlichen Änderung der Drehzahl kann die zeitliche Änderung des Sollwerts des Generatormoments auch abhängig von einem Istwert der eingespeisten Leistung bei Auftreten des Wiederherstellungssignals und einem Istwert der Drehzahl bestimmt werden.

In einer weiteren Alternative ist es auch möglich, die zeitliche Änderung des Sollwerts des Generatormoments abhängig von dem Istwert der Drehzahl und der im den mechanischen Rotor der Windenergieanlage anströmenden Wind verfügbaren Leistung zu bestimmen. Weiterhin ist es möglich, bei gesetztem Wiederherstellungssignal die maximal zulässige zeitliche Änderung für den Sollwert des Generatormoments abhängig von der zeitlichen Änderung der Drehzahl zu bestimmen, wobei als Regler ein Regler mit einem P-Glied und/oder einem PI-Glied eingesetzt werden kann. Über den Regler erfolgt eine Berücksichtigung der zeitlichen Änderung der Drehzahl, wobei zu dieser ein konstanter Wert für die zeitliche Änderung der Drehzahl hinzuaddiert wird.

In einer bevorzugten Weiterbildung des erfindungsgemäßen Verfahrens wird das Boost-Signal zurückgesetzt, wenn entweder eine vorbestimmte Zeitdauer $T_{boost}$ seit Auftreten des Boost-Signals verstrichen oder der Istwert der Frequenz im elektrischen Versorgungsnetz größer als ein zweiter vorbestimmter Frequenzwert ist, der größer als der erste vorbestimmte Frequenzwert ist. Das Zurücksetzen des Boost-Signals umfasst nicht notwendig, dass ein Signal aufgehoben oder ein Flag-Bit gelöscht wird, sondern kann auch als Beendigung einer ersten Betriebsphase des Boost-Betriebs allgemein charakterisiert werden. Hierdurch entsteht eine Hysterese, die ein Ansteigen der Frequenz über die Auslöseschwelle hinaus sicherstellt, bevor der Boost-Betrieb beendet wird. Insbesondere die zeitliche Begrenzung ist wichtig, um den Boost-Betrieb nicht zu lang auszudehnen, beispielsweise bis zu einer zu stark abfallenden Drehzahl. Grundsätzlich können für das Zurücksetzen des Boost-Signals auch andere Bedingungen vorgesehen sein, beispielsweise die Drehzahl oder eine andere Betriebsgröße der Windenergieanlage.

In einer bevorzugten Weiterbildung wird zunächst ein Übergangssignal bei Zurücksetzen des Boost-Signals erzeugt. Das Übergangssignal leitet den sogenannten Übergangsbetrieb ein. Im Übergangsbetrieb kann ansprechend auf das Übergangssignal bevorzugt die maximal zulässige Änderung des Sollwerts für das Generatormoment auf einen konstanten Wert gesetzt werden. Hierdurch wird für den Übergangsbetrieb ein schneller Anstieg des Generatormoments angestrebt.

Ein bevorzugtes Kriterium, das Wiederherstellungssignal zu setzen und das Übergangssignal zurückzusetzen, besteht darin, dass der Istwert der Drehzahl zunimmt und zugleich die eingespeiste Leistung kleiner als die im Wind verfügbare Leistung ist. Das letzte Kriterium stellt sicher, dass im Rahmen der Wiederherstellung noch mehr Leistung eingespeist werden kann.

In einer bevorzugten Ausgestaltung steuert eine Rampenfunktion die zeitliche Änderung des Sollwerts für das Generatormoment.

Der Wiederherstellungsbetrieb wird beendet, wenn der Sollwert des Generatormoments innerhalb eines durch die obere Grenze und die untere Grenze des Begrenzers vorgegebenen Bereichs liegt. Durch entsprechend vorgegebene obere und untere Grenzen aus dem regulären Betrieb kann eine Beendigung des Wiederherstellungsbetriebs sichergesellt werden.

In einer bevorzugten Ausgestaltung des Verfahrens wird das Boost-Signal erzeugt, wenn die Frequenz im elektrischen Versorgungsnetz unter einen ersten vorbestimmten Frequenzwert fällt. Das Abfallen der Frequenz unter den ersten vorbestimmten Frequenzwert löst das Boost-Signal aus. Ferner wird im Boost-Betrieb der berechnete Sollwert für das Generatormoment sowohl als obere Grenze als auch als untere Grenze an den Begrenzer angelegt. Dies hat den Vorteil, dass die herkömmliche Drehzahl/Drehmomentregelung fortgeführt werden kann und durch das Zusammenziehen von oberer und unterer Grenze an dem Begrenzer ein neuberechneter Sollwert für das Generatormoment vorgegeben werden kann.

Ein bevorzugtes Ausführungsbeispiel der Erfindung wird nachfolgend anhand der Figuren näher erläutert. Es zeigen:

Fig. 1    in einer schematischen Ansicht eine zur Einspeisung in das elektrische Versorgungsnetz vorgesehene Windenergieanlage,

Fig. 2    eine schematische Ansicht zur Regelung eines Umrichters,

Fig. 3    eine schematische Ansicht zur Bestimmung der oberen und unteren Grenze für den Begrenzer,

Fig. 4    eine schematische Ansicht zur Berechnung des Sollwerts für das Generatordrehmoment,

Fig. 5    die Berechnung der oberen und unteren Grenze während der Übergangsbetriebs oder des Wiederherstellungsbetriebs,

Fig. 6    den Vorgang zum Umschalten vom Übergangsbetrieb in den Wiederherstellungsbetrieb,

Fig. 7    vier Alternativen zum Betrieb der Windenergieanlage im Übergangs- und/oder Wiederherstellungsbetrieb und

Fig. 8    eine schematische Ansicht der Zeitentwicklung für Leistung, Generatormoment, Drehzahl und Netzfrequenz.

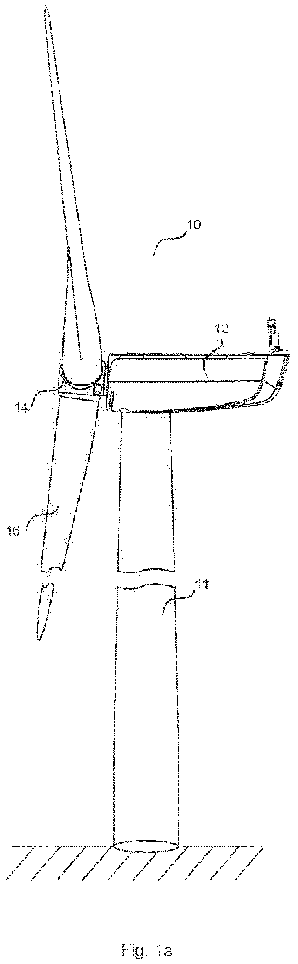

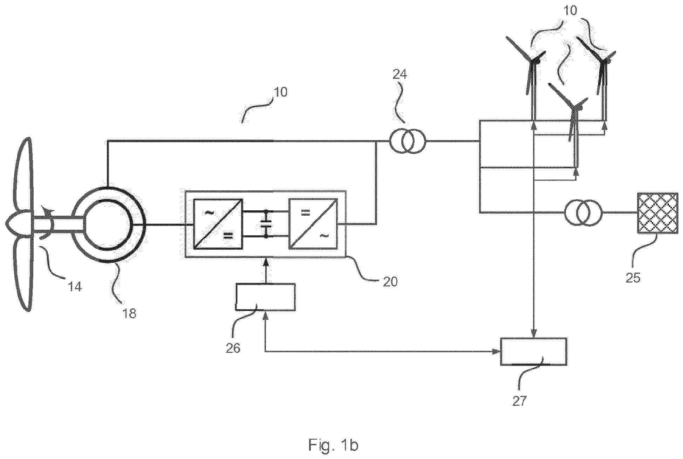

Fig. 1a zeigt in einer schematischen Ansicht eine Windenergieanlage 10 mit einem Turm 11, einer Gondel 12 und einem Rotor 14. Der Rotor trägt mehrere Rotorblätter 16, die Leistung aus dem Wind aufnehmen. Fig. 1b zeigt eine Ausgestaltung einer Windenergieanlage 10 mit einem doppeltgespeisten Asynchrongenerator 18, welcher rotorseitig über einen Umrichter 20 und statorseitig direkt, also ohne Zwischenschaltung eines Umrichters, mit einem elektrischen Übertragungsnetz 25 verbunden ist. Alternativ kann die Windenergieanlage auch mit einem Vollumrichter konfiguriert sein. Die Einspeisung in das elektrische Übertragungsnetz 25 erfolgt beispielsweise über einen Transformator 24.Die Windenergieanlage 10 kann Teil eines Windparks bestehend aus mehreren Windenergieanlagen 10 sein, die beispielsweise über ein Parknetz und einen Hochspannungstransformator mit dem elektrischen Übertragungsnetz 25 verbunden sind. Die Windenergieanlage 10 weist eine Regelung 26 auf, die mit dem Umrichter 20, bzw. dessen Regelung datenkommunikativ verbunden ist. Die Regelung 26 ist mit einer Windparkregelung 27, die zur Regelung mehrerer Windenergieanlagen 10 eingerichtet ist, datenkommunikativ verbunden. Das erfindungsgemäße Verfahren kann vorzugsweise in der Regelung 26 implementiert sein. Grundsätzlich ist die Erfindung auch auf Ebene des Windparks einsetzbar, indem jeder einzelnen Windenergieanlage 10 Sollwerte von dem Windparkregler 27 vorgegeben werden und eine Frequenz im Einspeisepunkt oder im Parknetz gemessen wird.

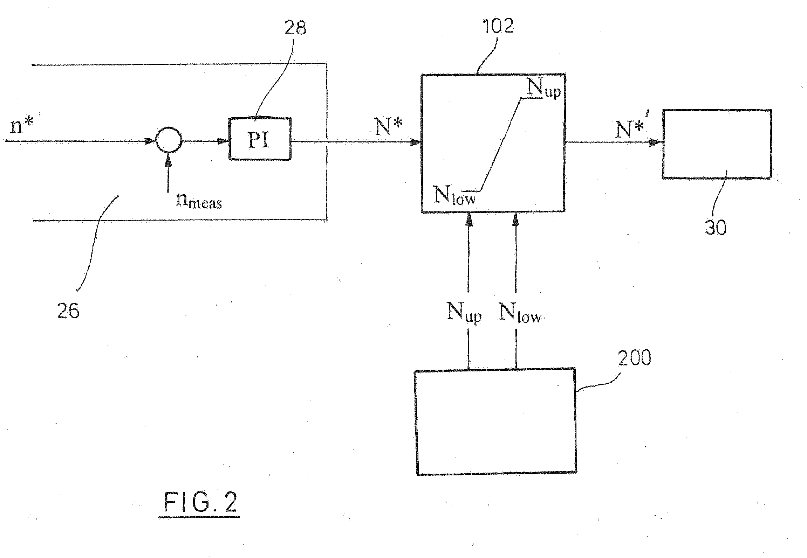

Fig. 2 zeigt in einer schematischen Ansicht eine Steuerung 26 für den Normalbetrieb der Windenergieanlage. Über einen PI-Regler wird eine Regeldifferenz bestehend aus einem Drehzahlsollwert $n^*$ und einem Istwert der Drehzahl $n_{meas}$ ausgeregelt und in einen Drehmomentsollwert $N^*$ 101 für den Umrichter umgewandelt. Der Drehmomentsollwert $N^*$ liegt an einem Begrenzer 102 an. Bei dem Begrenzer handelt es sich um einen Begrenzer mit einstellbarer unterer und oberer Grenze (Dynamic Limiter). Die untere Grenze $N_{low}$ und die obere Grenze $N_{up}$ werden durch eine Begrenzersteuerung 200 vorgegeben. Die Begrenzersteuerung 200 kann auch Verfahrensabläufe für das Bremsen der Windenergieanlage besitzen. Auch können Verfahrensabläufe für den Ausfall des Spannungsnetzes, sogenannter Fault Ride Through-Fall (FRT-Fall), vorgesehen sein. Im vorliegenden Fall wird die Situation von Virtual Inertia und deren Verfahrensablauf diskutiert, bei dem Rotationsenergie aus dem drehenden Teil der Windenergieanlage unter Erhöhung der eingespeisten elektrischen Leistung entnommen wird. Der Ausgangswert des Begrenzers 102 wird dazu verwendet, das Generatormoment $N^*$ anzusteuern. Die Steuerung des Generatormoments erfolgt je nach verwendetem Generator und seiner Schaltart. Bei der vorstehend angesprochenen doppeltgespeisten Asynchronmaschine 18 wird das Generatormoment beispielsweise durch die Ansteuerung der Umrichter eingestellt. Das Generatormoment ist das elektrische Moment, das an dem Generator zur Erzeugung von elektrischer Leistung anliegen muss. In dem in Fig. 2 dargestellten Beispiel liegt der Sollwert für das Generatormoment $N^*$ an einem Umrichter 30 an, der dem generator- oder dem netzseitigen Umrichter 20, 22 oder beiden entsprechen kann.

Der Betriebszustand der Virtual Inertia verwendet eine gemessene Frequenz $f_{meas}$ in dem Einspeisepunkt der Windenergieanlage. Der gemessene Frequenzwert $f_{meas}$ stellt den Istwert dar und detektiert eine Abweichung von dem Nennwert. Bei einem Windpark mit mehreren zusammengeschlossenen Windenergieanlagen empfängt eine Parksteuerung die gemessene Frequenz und leitet die gemessene Frequenz ohne weitere Verarbeitung an alle angeschlossenen Windenergieanlagen weiter oder veranlasst einen entsprechenden Verfahrensablauf an der Windenergieanlage. Alternativ kann die Frequenz auch lokal für eine oder mehrere Anlagen gemessen werden, wodurch eine Laufzeitverzögerung und eine Kommunikationsaufwand im Windparkt vermieden wird.

Die Frequenzmessung wird in der Steuerung der Windenergieanlage ausgewertet, um die Funktion des Virtual Inertia auszulösen. Wenn die Frequenz unterhalb einer Auslösefrequenz $f_{trigger}$ als erstem vorbestimmten Frequenzwert fällt, dann wird das Verfahren zur Virtual Inertia in der Begrenzersteuerung 200 aktiviert. Ist die Virtual Inertia-Funktion aktiviert, wird ein entsprechendes Boost-Signal gesetzt und eine Reihe von Betriebszuständen durchlaufen: Boost-Betrieb und Wiederherstellungsbetrieb mit eventuell einem zwischengeschalteten Übergangsbetrieb.

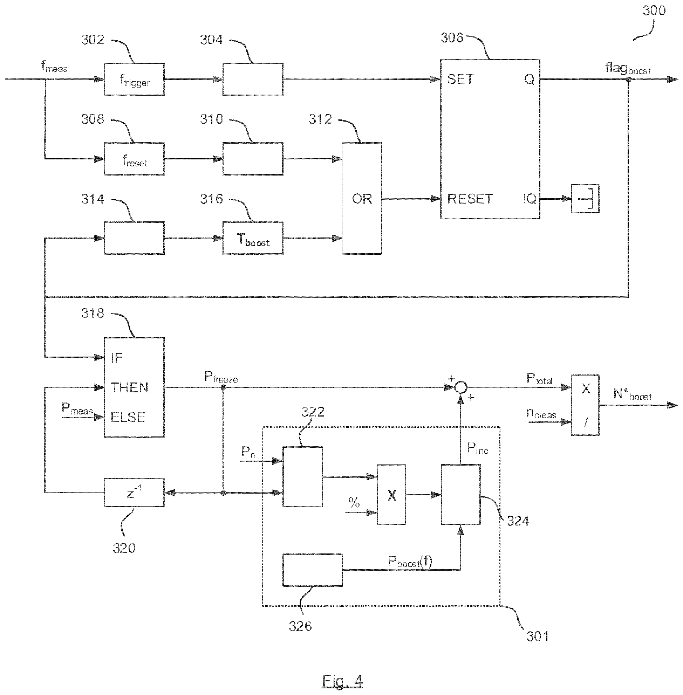

Fig. 4 beschreibt die Erzeugung des Boost-Signals $flag_{boost}$ sowie des Sollwerts für das Generatormoment $N_{boost}$. Eingangsgröße für die Erzeugung des Boost-Signals $flag_{boost}$ ist der Istwert der Frequenz $f_{meas}$ im elektrischen Versorgungsnetz. In Schritt 302 wird der Istwert der Frequenz mit einem ersten vorbestimmten Frequenzwert für die Auslösefrequenz $f_{trigger}$ verglichen. Wenn der Istwert kleiner als der erste vorbestimmte Frequenzwert ist, wird der Ausgang der entsprechenden Erkennungsschaltung 304 auf 1 gesetzt. Das Ausgangssignal der Erkennungsschaltung 304 liegt am SET-Eingang eines Flipflops 306 ein, so dass an dessen Q-Ausgang das Boost-Signal $flag_{boost}$ vorliegt. Ist der Istwert der Frequenz bei einem Vergleich 308 größer als ein zweiter vorbestimmter Frequenzwert für eine Rücksetzfrequenz $f_{reset}$, wird dies in der Erkennungsschaltung 310 erkannt und eine entsprechender 1-Wert liegt am Eingang der Oder-Schaltung 312 an. Am weiteren Eingang der Oder-Schaltung 312 liegt der Ausgang eines Zeitgliedes 314 an, dessen Ausgang an einem Komparator 316 zur Bestimmung einer vorbestimmten Zeitdauer, der Boostdauer $T_{boost}$ anliegt. Ist die vorbestimmte Zeitdauer $T_{boost}$ überschritten, liegt eine 1 an der Oder-Schaltung 312 an. Weitere Bedingungen für die Oder-Schaltung 312 werden nachfolgend noch beschrieben. Der Ausgang der Oder-Schaltung 312 liegt an dem RESET-Eingang des Flipflops 306 an, der dazu dient, den Q-Ausgang auf null zu setzen.

Das Boost-Signal $flag_{boost}$ liegt an einer Wenn-Dann-Verzweigung 318 an. Wenn das Boost-Signal $flag_{boost}$ gegeben ist, dann liegt am Dann-Ausgang eine festgehaltene elektrische Leistung $P_{freeze}$ 320 an. Die festgehaltene Leistung $P_{freeze}$ 320 ist über ein Zeitglied $z^{-1}$ 324 rückgekoppelt. Mit der festgehaltenen Leistung $P_{freeze}$ 320 wird der Istwert der elektrischen Leistung vor Auftreten des Boost-Signals festgehalten und als Basis für die Steuerung während des Boost-Betriebs verwendet.

In einem zusätzlichen Block 301 wird eine zusätzliche Leistung $P_{inc}$ als Leistungszusatz bestimmt. Zur Bestimmung des Leistungszusatzes können verschiedene Ansätze gewählt werden. In einem Ansatz wird die Nennleistung $P_n$ zugrunde gelegt. In einer alternativen Ausgestaltung kann die festgehaltene Leistung $P_{freeze}$ zur Basis genommen werden. Je nach Ausgestaltung kann dann ein prozentualer Ansatz als Bruchteil mit der Basisgrößer multipliziert werden, um zu dem Leistungszusatz $P_{inc}$ zu gelangen. Alternativ ist es auch möglich, einen frequenzabhängigen Faktor zu wählen, der je nach Frequenzwert dann mit der Basisgröße multipliziert wird. Festgehaltene Leistung $P_{freeze}$ und zusätzliche Leistung $P_{inc}$ werden miteinander addiert und durch den aktuellen Istwert der Drehzahl $n_{meas}$ dividiert, um den Sollwert für das Generatormoment $N^*_{boost}$ zu bestimmen.

Zusammenfassend kann zu dem Ablauf in Fig. 4 festgehalten werden, dass, wenn die Frequenz unterhalb des Frequenzwerts $f_{trigger}$ detektiert wird, ein Boost-Signal $flag_{boost}$ für eine vorgebbare Boostdauer $T_{boost}$ generiert wird. Durch die Verwendung einer zweiten vorbestimmten Frequenz $f_{reset}$, kann der Boost-Modus vorzeitig verlassen werden. Weitere mögliche Bedingungen für ein vorzeitiges Verlassen des Boost-Betriebs können beispielsweise eine minimale Generatordrehzahl sein. Durch die minimale Generatordrehzahl kann ein Abschalten der Windenergieanlage als Ergebnis des Boost-Betriebs vermieden werden. Ebenso kann für den Generator eine minimale Geschwindigkeit oder eine maximale Drehzahlabsenkung definiert sein, um einen Stall-Betrieb und ein Herunterfahren der Windenergieanlage zu vermeiden. Wird der Boost-Betrieb vorzeitig beendet, so wird auch das Boost-Signal $flag_{boost}$ zurückgesetzt.

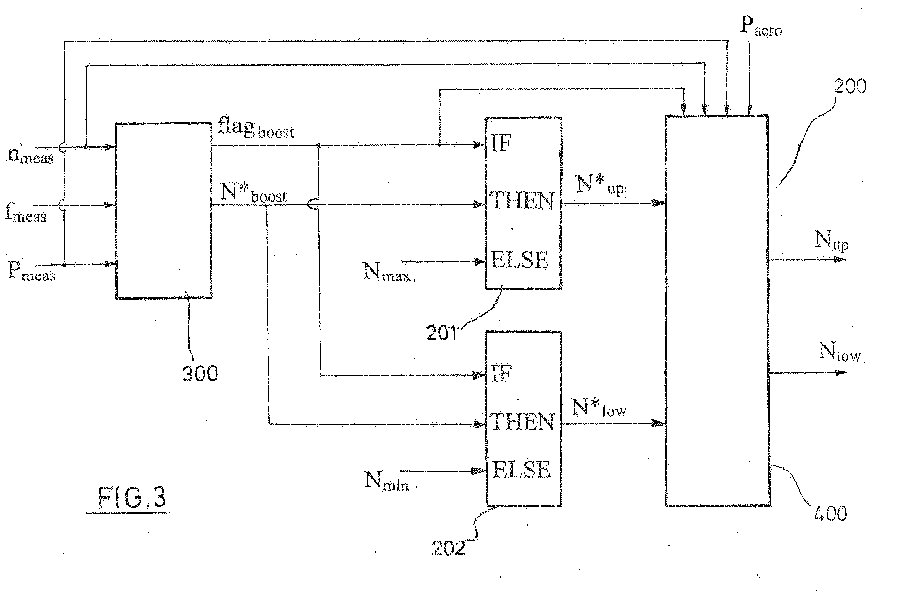

Die in Fig. 4 dargestellte Berechnung des Boost-Signals und des Sollwerts für das Generatordrehmoment im Boost-Betrieb wird gemäß dem Blockschaltbild aus Fig. 3 zur Bestimmung der oberen Grenze $N_{up}$ und der unteren Grenze $N_{low}$ an dem Begrenzer 102 durchgeführt. Zur Bestimmung der oberen und unteren Grenze für den Begrenzer 102 liegen in Fig. 3 der Istwert der Drehzahl $n_{meas}$, der Istwert der Frequenz $f_{meas}$ und der Istwert der eingespeisten elektrischen Leistung $P_{meas}$ an einem Block 300 ein. Der Block 300 besitzt den in Bezug auf Fig. 4 erläuterten Aufbau. Ausgangsgrößen von Block 300 sind das Boost-Signal $flag_{boost}$ und der Sollwert für das Drehmoment $N^*_{boost}$ im Boost-Betrieb. An einer Wenn-Dann-Verzweigung 201 und 202 liegt jeweils das Boost-Signal $flag_{boost}$ sowie der ermittelte Drehmomentsollwert $N^*_{boost}$ für den Boost-Betrieb an. Zudem liegen als "Sonst"-Alternative die für den Normalbetrieb vorgesehenen Werte für das maximale Drehmoment $N_{max}$ und auf das minimale Drehmoment $N_{min}$ vor. Ist das Boost-Signal $flag_{boost}$ gesetzt, so wird solange als obere Grenze $N^*_{up}$ 203 und $N^*_{low}$ 204 in der Wenn-Dann-Beziehung ausgegeben. Liegt kein Boost-Signal $flag_{boost}$ vor, so wird der Wert $N_{max}$ als obere Grenze $N^*_{up}$ und $N_{min}$ als untere Grenze $N^*_{low}$ für den Begrenzer gesetzt.

Die durch die Wenn-Dann-Beziehung ermittelten oberen und unteren Grenzen liegen an einem einheitlichen Steuerblock 400 an. Der einheitliche Steuerblock 400 besitzt als weitere Eingangssignale auch das Boost-Signal sowie den Istwert der Drehzahl $n_{meas}$ und den Istwert der eingespeisten elektrischen Leistung $P_{meas}$. Hinzu kommt der Wert der aktuell aus dem Wind zur Verfügung stehenden Leistung $P_{aero}$. In dem einheitlichen Steuerblock 400 werden aus den anliegenden Sollwerten für die obere Grenze $N^*_{up}$ und die untere $N^*_{low}$ die an dem Begrenzer anliegenden oberen und unteren Grenzen $N_{low}$ und $N_{up}$ berechnet. Es handelt sich hierbei um einen einheitlichen Steuerblock 400, da dieser die anliegenden Sollwerte für das Drehmoment in jedem Betriebszustand, der bei einer Virtual Inertia-Funktion auftreten kann, steuert.

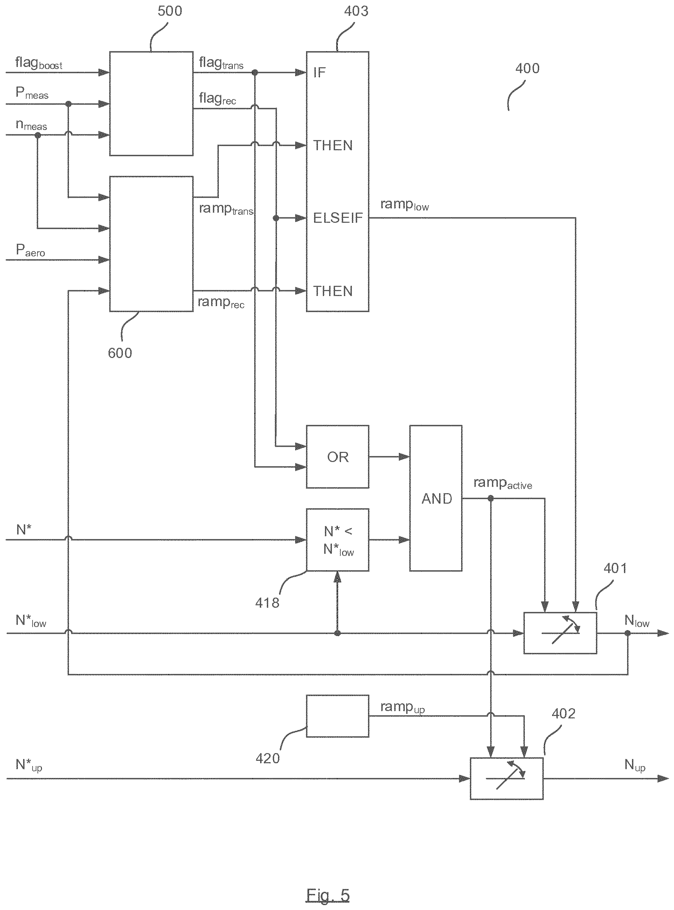

Die Umwandlung der Sollwerte $N^*_{low}$ und $N^*_{up}$ in Steuergrößen $N_{low}$ und $N_{up}$ erfolgt über eine Rampenfunktion 401, 402. Die Rampenfunktionen werden über ein Rampensignal 410 aktiv geschaltet. Das Aktivschalten der Rampenfunktion erfolgt, wenn entweder das Übergangssignal $flag_{trans}$ 412 oder das Wiederherstellungssignal $flag_{recov}$ 414 gesetzt ist. Zudem muss der aus der Drehzahlsteuerung gewonnene Sollwert $N^*$ 416 für das Generatormoment an dem Komparator 418 kleiner als der Sollwert für die untere Drehmomentgrenze $N^*_{low}$. Nicht dargestellt in Fig. 5 ist die weitere Alternative, dass ein zweiter Komparator vorgesehen ist, der zusätzlich prüft, ob der Sollwert für das Generatormoment $N^*$ eventuell auch größer als der Sollwert für die obere Grenze $N^*_{up}$ ist. Auf jeden Fall ist notwendige Voraussetzung für das Aktivieren der Rampenfunktionen 401 und 402, dass der Sollwert $N^*$ für das Generatormoment sich außerhalb der durch die Sollwerte für das Generatormoment $N^*_{low}$ und $N^*_{up}$ befindet.

Sind die Rampenfunktionen aktiv geschaltet, so liegt an der Rampenfunktion 401 die Rampe $ramp_{low}$ für die untere Grenze am Begrenzer und an der Rampenfunktion 402 die Rampe $ramp_{up}$ für die obere Grenze am Begrenzer an. Bei den Rampen handelt es sich um maximal zulässige zeitliche Änderungen für das Generatormoment.

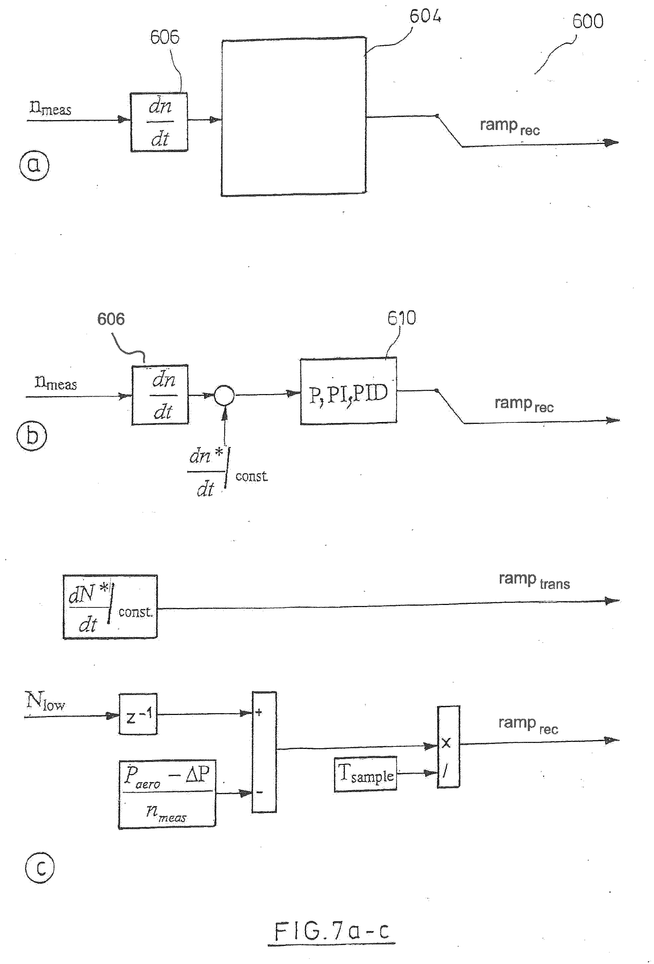

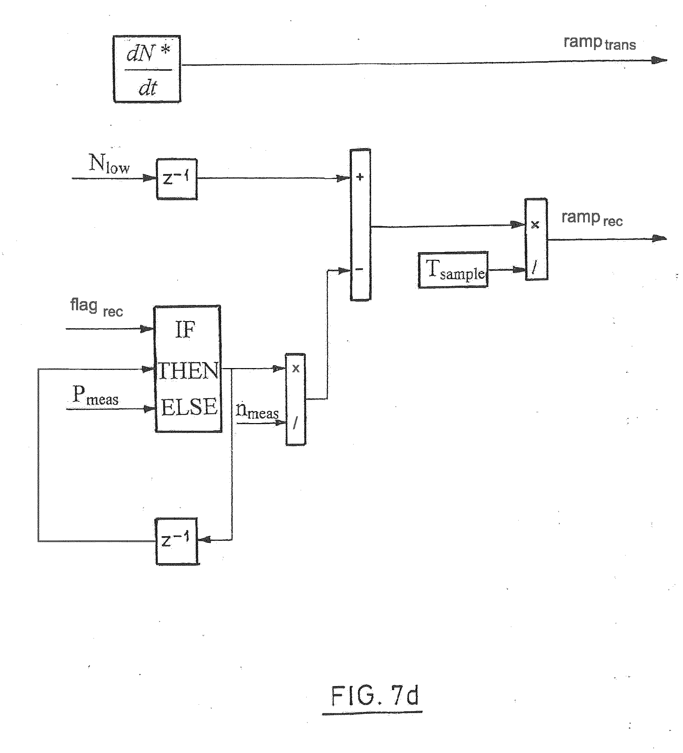

Die Berechnung der Rampenfunktionen erfolgt in Block 600. Fig. 7 zeigt vier Ausführungsbeispiele für die Berechnungen der Rampen in Block 600. Bei der Berechnung der Rampenfunktionen ist zu unterscheiden, ob nach der Beendigung des Boost-Betriebs ein Übergangsbetrieb für die Windenergieanlage vorgesehen ist oder ob die Betriebsführung direkt in den Wiederherstellungsbetrieb wechselt. Fign. 7a und 7b betreffen eine Betriebsführung, bei der die Windenergieanlage direkt in den Wiederherstellungsmodus wechselt, während Fign. 7c und 7d noch einen zwischengeschalteten Übergangsbereich kennzeichnen.

Fig. 7a zeigt die Bestimmung eines Ansteuersignals 602 $ramp_{recov}$ für die Rampenfunktion. Das Ansteuersignal $ramp_{recov}$ wird beispielsweise aus einer Lookup-Tabelle gewonnen, in der die zeitliche Änderung des Generatormoments über der Änderung der Drehzahl aufgetragen ist. Die Änderung der Drehzahl wird aus dem Istwert der Drehzahl $n_{meas}$ über ein Differenzierglied 606 bestimmt. In der Lookup-Tabelle 604 wird das Verhältnis zwischen der aus dem Wind entnehmbaren Leistung $P_{aero}$ und der eingespeisten elektrischen Leistung hergestellt. In der Lookup-Tabelle ist zu berücksichtigen, dass durch eine steigende Drehzahl die Rotationsenergie in der Windenergieanlage zunimmt, während bei abnehmendem Generatormoment $N$ auch die eingespeiste elektrische Leistung abnimmt. Über das Steuersignal $ramp_{recov}$ 602 wird die maximal zulässige Änderung des Generatormoments begrenzt. Bei einer Anwendung auf die Rampenfunktionen kann $ramp_{recov}$ sowohl als $ramp_{low}$ an die Rampenfunktion 401 und als $ramp_{up}$ an die Rampenfunktion 402 angelegt werden.

Fig. 7b zeigt eine alternative Ausgestaltung, bei der die zeitliche Ableitung des Istwertes durch einen konstanten Änderungsterm

$$\frac{dn^*}{dt}\Big/_{const}$$

608 addiert. Die auf diese Art und Weise überhöhte Drehzahländerung wird über einen Regler 610 geregelt. Der Regler 610 weist ein Proportionalglied auf und kann als P-, PI- oder PID-Regler ausgelegt sein. Ausgangsgröße des Reglers 610 ist das Steuersignal 602 $ramp_{recov}$ für die Ansteuerung der Rampenfunktion 401 und 402.

Fig. 7c zeigt ein Beispiel zur Berechnung der Steuersignale $ramp_{trans}$ und $ramp_{recov}$ für die Rampenfunktionen, wenn nach dem Boost-Betrieb zwischen dem Übergangsbetrieb und dem Wiederherstellungsbetrieb unterschieden wird. Während des Übergangsbetriebs

$$\frac{dN^*}{dt}\Big/_{const}$$

wird ein konstanter Wert 631 für die maximal zulässige Änderung des Generatormoments vorgegeben. Diese Vorgabe ist für den Übergangsbereich zeitlich konstant. Wird nach dem Übergangsbetrieb in den Wiederherstellungsbetrieb umgeschaltet, so wird, ausgehend von der zuvor vorliegenden unteren Grenze $N_{low}$, diese um einen Zeitschritt zurückversetzt wird, eine Quotientengröße 612 subtrahiert. Die Quotientengröße 612 setzt sich zusammen aus dem Quotienten, der aus der Differenz von aus dem Wind verfügbarer Leistung $P_{aero}$ und einer vorgegebenen Leistungsdifferenz $\Delta P$ gebildet ist. Der Nenner des Quotienten wird durch den Istwert der Drehzahl gebildet. Die Leistung dividiert durch die Drehzahl entspricht einem Drehmoment, wobei der Quotient interpretiert werden kann als ein Drehmoment, das vorgegeben werden soll, um eine konstante Leistungsdifferenz $\Delta P$ unterhalb der verfügbaren Leistung $P_{aero}$ zu bleiben. Um diese Größe wird das vorliegende Generatormoment reduziert. Die Differenz wird durch eine Zeitspanne $T_{sample}$ 614 dividiert, um so eine maximal zulässige Drehmomentänderung als Steuersignal $ramp_{recov}$ für die Rampenfunktion zu erhalten. Kerngedanke im Wiederherstellungsbetrieb ist, dass die Leistungsdifferenz $\Delta P$ nicht aus dem Wind entnommen wird, um so die Rotationsenergie der Windenergieanlage zu erhöhen.

Eine weitere Ausgestaltung wird in Fig. 7d erläutert. Auch hier ist das Steuersignal 602 für die Rampenfunktion während des Übergangsbetriebs auf einen

$$\frac{dN^*}{dt}\Big/_{const}$$

konstanten Wert 641 gesetzt. Im Wiederherstellungsbetrieb wird das Steuersignal $ramp_{recov}$ 616 mit einem ähnlichen Ansatz wie in Fig. 7c berechnet. Jedoch wird das zu subtrahierende Moment in Schritt 618 nicht mit Hilfe einer fest vorgegebenen Differenzleistung bestimmt, sondern ausgehend von dem Leistungsistwert $P_{meas}$ und dem Istwert für die Drehzahl. Der Leistungsistwert wird solange das Wiederherstellungssignal $flag_{rec}$ an der Wenn-Dann-Verzweigung anliegt, über das Zeitglied $z^{-1}$ konstant gehalten, also auf dem Wert gehalten, bevor in den Wiederherstellungsbetrieb gewechselt wurde. Für die Drehzahl $n_{meas}$ wird der aktuelle Istwert gewählt. Kerngedanke bei dieser Ausgestaltung ist, dass durch das Festhalten des Leistungswerts eine entsprechend dem Istwert der Leistung bei Eintritt des Wiederherstellungsbetriebs proportionale Korrektur des Generatormoments erfolgt, wobei auf den Istwert der Drehzahl $n_{meas}$ abgestellt wird.

Bezogen auf den einheitlichen Steuerblock 600 bedeutet dies, dass, wenn in der Wenn-Dann-Verzweigung 403 das Übergangssignal $flag_{trans}$ 412 anliegt, das

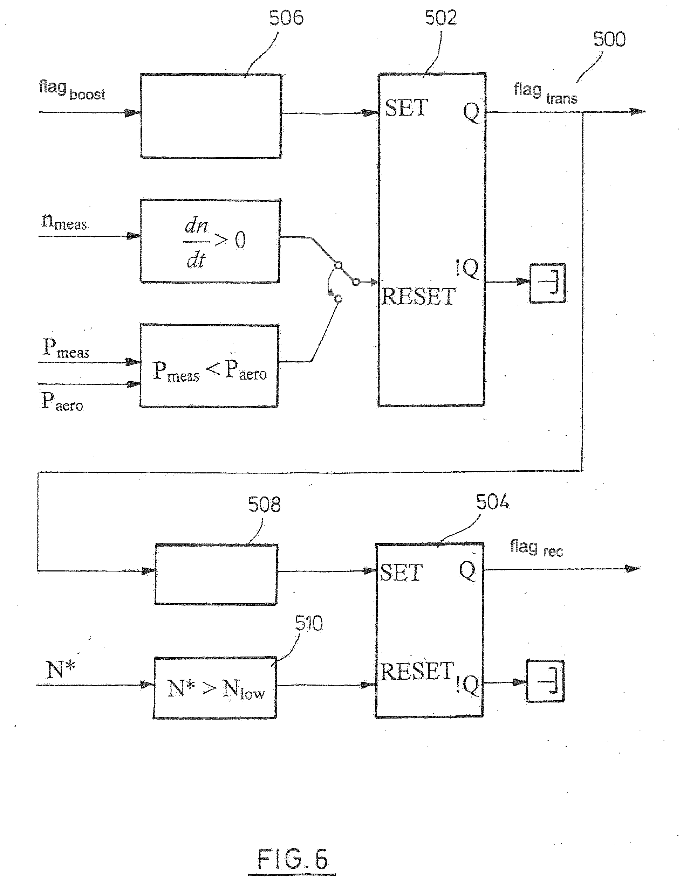

Steuersignal ramp$_{low}$ für die Rampenfunktion 401 dem berechneten Steuersignal ramp$_{trans}$ entspricht. Liegt dagegen das Wiederherstellungssignal flag$_{rec}$ 414 an der Wenn-Dann-Verzweigung 403 an, so ist das Steuersignal ramp$_{low}$ für die Rampenfunktion 401 durch das Steuersignal 616 ramp$_{recov}$ vorgegeben. Das Umschalten von dem Boost-Signal (flag$_{boost}$) zu dem Übergangssignal (flag$_{trans}$) oder dem Wiederherstellungssignal (flag$_{rec}$) ist in dem Umschaltblock 500 in Fig. 5 dargestellt. Ein möglicher näherer Aufbau für den Umschaltblock 500 findet sich in Fig. 6.

Zentrale Elemente für das Umschalten sind zwei Flipflop-Schaltungen 502, 504. An dem SET-Eingang der Flipflop-Schaltung 502 liegt das Boost-Signal flag$_{boost}$ an, das über eine Erkennungsschaltung 506 bei einem Heruntersetzen des Boost-Signals ein Eingangssignal an den SET-Eingang des Flipflops anlegt und damit ein Übergangssignal flag$_{trans}$ an dem Q-Ausgang der Flipflop-Schaltung 502 erzeugt. Die Endbedingung für den Übergangsbereich wird durch Setzen an dem RESET-Eingang des Flipflops 502 erzielt. Entweder kann für eine Beendigung des Übergangsbereichs darauf abgestellt werden, dass die Drehzahländerung positiv ist. Dies bedeutet, die Drehzahl nimmt wieder zu, so dass das Übergangssignal flag$_{trans}$ zurückgesetzt werden kann. Alternativ zu einer Drehzahlzunahme kann auch ein Signal an den RESET-Eingang der Flipflop-Schaltung angelegt werden, wenn die gemessene Leistung P$_{meas}$ kleiner als die aktuell aus dem Wind verfügbare Leistung P$_{aero}$ ist.

In beiden Fällen wird der Übergangsbereich beendet und das Übergangssignal flag$_{trans}$ heruntergesetzt. Ansprechend auf das Heruntersetzen des Übergangssignals flag$_{trans}$ legt die Detektionseinheit 508 ein Signal an den SET-Eingang der Flipflop-Schaltung 504 an. Entsprechend wird am Q-Ausgang das Wiederherstellungssignal flag$_{rec}$ gesetzt. Der Wiederherstellungsbetrieb hält dann an, bis am RESET-Eingang der Flipflop-Schaltung 504 das Ausgangssignal des Komparators 510 anliegt, das anzeigt, wenn der Sollwert für das Generatormoment N$^*$ größer als die untere Grenze N$_{low}$ am Begrenzer ist. Zusätzlich kann ein weiterer Komparator vorgesehen sein, der vergleicht, ob der Sollwert N$^*$ kleiner als der obere Grenzwert N$_{up}$ an dem Begrenzer ist.

Die Funktionalität des Übergangsbetriebs und des Wiederherstellungsbetriebs kann wie folgt zusammengefasst werden: Ein Signal für den Übergangsbetrieb wird gesetzt, sobald detektiert wird, dass der Boost-Betrieb deaktiviert wurde und das Signal für den Betrieb zur Virtual Inertia gesetzt ist. Der Übergangsbetrieb kann deaktiviert werden, wenn eine der beiden Bedingungen aus Fig. 6, die an dem RESET-Eingang der Flipflop-Schaltung 502 anliegen, erfüllt ist. Wenn die Drehzahl größer als ein vorgebbarer kleiner positiver Wert ist und groß genug ist, um Geschwindigkeitsoszillationen in dem Generator auszulösen. Die zweite Bedingung betrifft den Istwert der eingespeisten elektrischen Leistung, beispielsweise in Form der Wirkleistung, gegenüber der geschätzten, durch den Wind zur Verfügung gestellten aerodynamischen Leistung P$_{aero}$. Ein vorgebbarer Unterschied in der Leistung basiert auf den Verlusten zwischen aerodynamischer Leistung und eingespeister Leistung und sollte groß genug sein, um ein Auslösen von Oszillationen in der geschätzten aerodynamischen Leistung oder in der Wirkleistungsausgabe zu verhindern.

Ist der Übergangsbetrieb beendet, so wird der Wiederherstellungsbetrieb eingeleitet. Der Wiederherstellungsbetrieb ist solange zugeschaltet, solange der Drehmomentsollwert für den normalen Betrieb durch die untere Grenze des Begrenzers begrenzt ist (vgl. Komparator 510). Ein Deaktivieren des Wiederherstellungsbetriebs zeigt an, dass die Windenergieanlage wieder in ihren normalen Betrieb zurückkehrt.

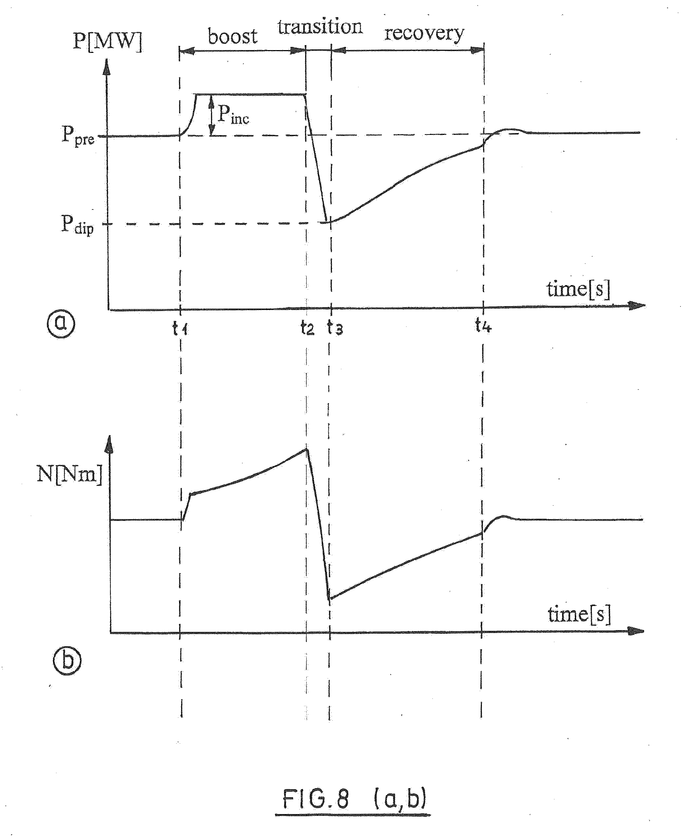

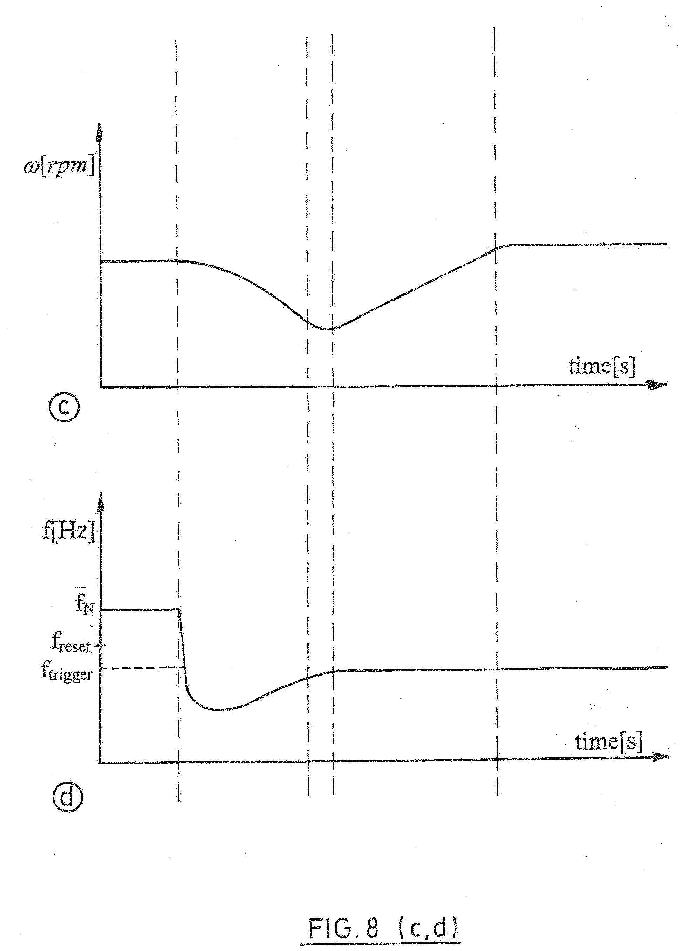

Fig. 8 zeigt über der Zeit den qualitativen Verlauf von Wirkleistung P, Generatormoment N, Drehzahl ω und Frequenz f im elektrischen Versorgungsnetz. Ausgelöst wird der Boost-Betrieb zum Zeitpunkt t$_1$, in dem die Netzfrequenz f unter einen Wert f$_{trigger}$ fällt. Im Zeitpunkt t$_1$ wird der Boost-Betrieb ausgelöst. Nach einem kurzen Anstieg der eingespeisten Wirkleistung und des Generatormoments N erreicht die eingespeiste Leistung einen konstanten Wert, der um P$_{inc}$ höher als der zuvor benutzte Leistungswert P$_{pre}$ ist. In dem Boost-Betrieb steigt das Generatormoment N an und die Drehzahl ω nimmt ab.

Nach der vorbestimmten Zeitdauer für die erhöhte Leistungseinspeisung T$_{boost}$ ist der Zeitpunkt t$_2$ erreicht und es erfolgt der Übergangsbereich. Der Übergangsbereich ist dadurch gekennzeichnet, dass das Generatormoment mit konstanter Steigung zwischen der Zeitspanne t$_2$ und t$_3$ abnimmt. In dieser Zeitspanne stabilisiert sich die Drehzahl. Der Übergangsbereich wird beendet, wenn eine untere Leistungsgrenze P$_{dip}$ erreicht ist. Auf die Art und Weise wird sichergestellt, dass die Leistung an der Windenergieanlage nicht zu stark abfällt und es zu einem Herunterfahren der Windenergieanlage kommt. Nach Beendigung des Übergangsbetriebs beginnt der Wiederherstellungsbetrieb im Zeitpunkt t$_3$. Im Wiederherstellungsbetrieb nehmen sowohl Drehmoment als auch Drehzahl zu, bis der Wiederherstellungsbetrieb beendet ist. Zum Abschluss des Wiederherstellungsbetriebs entspricht die eingespeiste elektrische Leistung der vor dem Frequenzabfall eingespeisten elektrischen Leistung.

Bezugszeichenliste

| | |
|---|---|
| 10 | Windenergieanlage |
| 11 | Turm |
| 12 | Gondel |
| 14 | Rotor |
| 16 | Rotorblätter |
| 18 | Asynchrongenerator |
| 20 | Umrichter |
| 24 | Transformator |

| | |
|---|---|
| 25 | elektrisches Übertragungsnetz |
| 26 | Regelung |
| 27 | Windparkregelung |
| 28 | PT-Glied |
| 102 | Begrenzer |
| 200 | Begrenzersteuerung |
| 201 | Wenn-Dann-Verzweigung |
| 202 | Wenn-Dann-Verzweigung |
| 300 | Block |
| 301 | zusätzlicher Block |
| 302 | Komparator |
| 304 | Erkennungsschaltung |
| 306 | Flipflop |
| 308 | Komparator |
| 310 | Erkennungsschaltung |
| 312 | Oder-Schaltung |
| 314 | Zeitglied |
| 316 | Komparator |
| 318 | Wenn-Dann-Verzweigung |
| 320 | Zeitglied |
| 322 | Auswahlelement |
| 324 | Auswahlelement |
| 326 | Berechnungselement |
| 400 | einheitlicher Steuerblock |
| 401 | Rampenfunktion |
| 402 | Rampenfunktion |
| 403 | Wenn-Dann-Verzweigung |
| 418 | Komparator |
| 420 | Speicherblock |
| 500 | Umschaltblock |
| 502 | Flipflop-Schaltung |
| 504 | Flipflop-Schaltung |
| 506 | Erkennungsschaltung |
| 508 | Erkennungsschaltung |
| 510 | Komparator |
| 600 | Steuerblock |
| 604 | Look-Up-Tabelle |
| 606 | Differenzierglied |
| 610 | Regler |
| $n^*$ | Drehzahlsollwert |
| $n_{meas}$ | Drehzahlistwert |
| $N^*$ | Drehmomentsollwert |
| $N^{*'}$ | begrenzter Drehmomentsollwert |
| $N^*_{boost}$ | Sollwerts für das Generatormoment |
| $N_{low}$ | anliegende untere Grenze |
| $N_{up}$ | anliegende obere Grenze |
| $N^*_{low}$ | Sollwert für untere Grenze |
| $N^*_{up}$ | Sollwert für obere Grenze |
| $N_{min}$ | minimales Drehmoment |
| $N_{max}$ | maximales Drehmoment |
| $f_{meas}$ | gemessene Netzfrequenz |
| $f_{trigger}$ | Auslösefrequenz |
| $f_{reset}$ | Rücksetzfrequenz |
| $T_{boost}$ | Boostdauer |
| $P_{aero}$ | verfügbare Leistung |

| | |
|---|---|
| $P_{boost}(f)$ | frequenzabhängig bestimmter Leistungswert |
| $P_{freeze}$ | festgehaltene elektrische Leistung |
| $P_{inc}$ | zusätzlich bereitzustellende Leistung |
| $P_{el}$ | eingespeiste elektrische Leistung vor dem Auftreten des Frequenzeinbruchs |
| $P_{meas}$ | gemessene elektrische Leistung |
| $P_n$ | Nennleistung |
| $P_{total}$ | aggregierter Leistungssollwert |
| $N^*_{boost}$ | Sollwert für Generatormoment im Boost-Betrieb |
| $N_{max}$ | maximales Drehmoment im Normalbetrieb |
| $N_{min}$ | minimales Drehmoment im Normalbetrieb |
| $flag_{boost}$ | Boost-Signal |
| $flag_{trans}$ | Übergangssignal |
| $flag_{rec}$ | Wiederherstellungssignal |
| $ramp_{low}$ | Rampe für die untere Grenze |
| $ramp_{up}$ | Rampe für die obere Grenze |
| $ramp_{rec}$ | Steuersignal für Rampenfunktion im Wiederherstellungsbetrieb |
| $ramp_{trans}$ | Steuersignal für Rampenfunktion im Übergangsbetrieb |
| $ramp_{active}$ | Rampensignal |

$$\frac{dn^*}{dt}/_{const}$$

konstante zeitliche Änderung der Drehzahl

$$\frac{dN^*}{dt}/_{const}$$

konstanter Wert für zeitliche Drehmomentänderung

$\Delta P$  konstante Leistungsdifferenz

$P_{dip}$  untere Leistungsgrenze

**Patentansprüche**

1. Verfahren zur Steuerung einer Windenergieanlage, die einen über einen Umrichter gesteuerten Generator aufweist, in einem Boost-Betrieb, bei dem eine in ein elektrisches Versorgungsnetz eingespeiste elektrische Leistung über eine generatorische Verzögerung des Generators erhöht wird, wobei die folgenden Verfahrensschritte vorgesehen sind:

- Ermitteln eines Sollwerts für ein Generatormoment (N*) abhängig von einem Istwert einer Drehzahl ($n_{meas}$), **gekennzeichnet durch**
- Anlegen des ermittelten Sollwerts für das Generatormoment (N*) über einen Begrenzer mit vorgebbarer oberer und unterer Grenze ($N_{up}$, $N_{low}$) an einen Generator,
- Erzeugen eines Boost-Signals ($flag_{boost}$) für einen Wechsel in einen Boost-Betrieb, in dem eine erhöhte Leistung in das elektrische Versorgungsnetz eingespeist wird,
- Ansprechend auf das Boost-Signal (flag$_{boost}$) bestimmen des Sollwerts für das Generatormoment (N*$_{boost}$) im Boost-Betrieb, das gegenüber einem Ist-Wert der eingespeisten Leistung (Pfreeze) zu einer erhöhten eingespeisten elektrischen Leistung (P$_{freeze}$ + P$_{inc}$) führt, und
- Ansprechend auf ein Wiederherstellungssignal (flag$_{rec}$), das ein Zurückführen der Windenergieanlage in einen stabilen und für den Dauerbetrieb geeigneten Zustand einleitet, erfolgt ein Begrenzen einer zeitlichen Änderung des Sollwerts für das Generatormoment (dN*/dt) in einem Wiederherstellungsbetrieb.

2. Verfahren nach Anspruch 1, **dadurch gekennzeichnet, dass** bei gesetztem Wiederherstellungssignal (flag$_{rec}$) die maximal zulässige zeitliche Änderung des Sollwerts für das Generatormoment (dN*/dt) abhängig von der zeitlichen Änderung der Drehzahl (dn/dt) bestimmt wird.

3. Verfahren nach Anspruch 1 oder 2, **dadurch gekennzeichnet, dass** bei gesetztem Wiederherstellungssignal (flag$_{rec}$) die maximal zulässige zeitliche Änderung des Sollwerts des Generatormoments (dN*/dt) abhängig von einem Istwert der eingespeisten Leistung (P$_{meas}$) bei Auftreten des Wiederherstellungssignals und einem Istwert der Drehzahl (n$_{meas}$) bestimmt wird.

4. Verfahren nach Anspruch 1 oder 2, **dadurch gekennzeichnet, dass** bei gesetztem Wiederherstellungssignal (flag$_{rec}$) die maximal zulässige zeitliche Änderung des Sollwerts des Generatormoments (dN*/dt) abhängig von dem Istwert der Drehzahl (n$_{meas}$) und der verfügbaren Leistung (P$_{aero}$) bestimmt wird.

5. Verfahren nach Anspruch 1 oder 2, **dadurch gekennzeichnet, dass** bei gesetztem Wiederherstellungssignal (flag$_{rec}$) die maximal zulässige zeitliche Änderung des Sollwerts für das Generatormoment (dN*/dt) abhängig von der zeitlichen Änderung der Drehzahl (dn$_{meas}$/dt) über einen Regler mit einem P-Glied und/oder einem PI-Glied bestimmt wird.

6. Verfahren nach Anspruch 5, **dadurch gekennzeichnet, dass** der zeitlichen Änderung des Istwerts der Drehzahl (dn$_{meas}$/dt) für die Bestimmung der maximal zulässigen zeitlichen Änderung des Sollwerts für das Generatormoment (dN*/dt) ein konstanter Term (dn*/dt) hinzuaddiert wird.

7. Verfahren nach einem der Ansprüche 1 bis 6, **dadurch gekennzeichnet, dass** das Boost-Signal (flagboost) zurückgesetzt wird, wenn entweder eine vorbestimmte Zeitdauer (T$_{boost}$) seit Auftreten des Boost-Signals (flag$_{boost}$) verstrichen ist oder der Ist-Wert der Frequenz (f$_{meas}$) im elektrischen Versorgungsnetz größer als ein zweiter vorbestimmter Frequenzwert (f$_{reset}$) ist, der größer als der erste vorbestimmte Frequenzwert (f$_{trigger}$) ist.

8. Verfahren nach einem der Ansprüche 1 bis 7, **dadurch gekennzeichnet, dass** ein Übergangssignal (flag$_{trans}$) bei Zurücksetzen des Boost-Signals (flagboost) und vor einem Wiederherstellungssignal (flag$_{rec}$) erzeugt wird.

9. Verfahren nach Anspruch 8, **dadurch gekennzeichnet, dass** bei Vorliegen des Übergangssignals (flag$_{trans}$) die maximal zulässige zeitliche Änderung des Sollwerts für das Generatormoment (dN*/dt) auf einen konstanten Wert gesetzt wird.

10. Verfahren nach Anspruch 8 oder 9, **dadurch gekennzeichnet, dass** das Übergangssignal (flag$_{trans}$) zurückgesetzt und das Wiederherstellungssignal (flag$_{rec}$) gesetzt wird, wenn der Istwert der Drehzahl (n$_{meas}$) zunimmt und die eingespeiste Leistung (P$_{meas}$) kleiner als die verfügbare Leistung (P$_{aero}$) ist.

11. Verfahren nach einem der Ansprüche 1 bis 10, **dadurch gekennzeichnet, dass** eine Rampenfunktion die zeitliche Änderung des Sollwerts für das Generatormoment (dN*/dt) steuert.

12. Verfahren nach einem der Ansprüche 1 bis 11, **dadurch gekennzeichnet, dass** das Wiederherstellungssignal (flag$_{rec}$) zurückgesetzt wird, wenn der Sollwert des Generatormoments (N*) innerhalb eines durch die obere Grenze (N$_{up}$) und die untere Grenze (N$_{low}$) des Begrenzers vorgegebenen Bereichs liegt.

## Claims

1. A method for controlling a wind turbine which has a generator controlled by way of an inverter, in a boost mode, in which an electrical power fed into an electrical supply network is increased by way of a generational deceleration of the generator, wherein the following method steps are provided:

- establishing a set value for a generator torque (N*) depending on an actual value of a rotational speed (n$_{meas}$), **characterized by**
- applying the established set value for the generator torque (N*) by way of a limiter having a predefinable upper and lower limit (N$_{up}$, N$_{low}$) to a generator,
- producing a boost signal (flag$_{boost}$) for a change to a boost mode, in which an increased power is fed into the electrical supply network,

- in response to the boost signal (flag$_{boost}$), determining the set value for the generator torque (N*b$_{oos}$t) in boost mode, which leads to an increased fed-in electrical power (P$_{freeze}$ + P$_{inc}$) compared with an actual value of the fed-in power (P$_{freeze}$), and

- in response to a recovery signal (flag$_{rec}$), which initiates a return of the wind turbine to a stable condition which is suitable for continuous operation, a temporal change of the set value for the generator torque (dN*/dt) is limited in a recovery mode.

2. The method according to Claim or 1, **characterized in that** when the recovery signal (flag$_{rec}$) is set, the maximum permissible temporal change of the set value for the generator torque (dN*/dt) is determined depending on the temporal change of the rotational speed (dn/dt).

3. The method according to Claim 1 or 2, **characterized in that** when the recovery signal (flag$_{rec}$) is set, the maximum permissible temporal change of the set value of the generator torque (dN*/dt) is determined depending on an actual value of the fed-in power (P$_{meas}$) when the recovery signal occurs and depending on an actual value of the rotational speed (n$_{meas}$).

4. The method according to Claim 1 or 2, **characterized in that** when the recovery signal (flag$_{rec}$) is set, the maximum permissible temporal change of the set value of the generator torque (dN*/dt) is determined depending on the actual value of the rotational speed (n$_{meas}$) and the available power (P$_{aero}$).

5. The method according to Claim 1 or 2, **characterized in that** when the recovery signal (flag$_{rec}$) is set, the maximum permissible temporal change of the set value for the generator torque (dN*/dt) is determined depending on the temporal change of the rotational speed (dn$_{meas}$/dt) by way of a controller having a P element and/or a PI element.

6. The method according to Claim 5, **characterized in that** a constant term (dn*/dt) is added to the temporal change of the actual value of the rotational speed (dn$_{meas}$/dt) for the determination of the maximum permissible temporal change of the set value for the generator torque (dN*/dt).

7. The method according to any one of Claims 1 to 6, **characterized in that** the boost signal (flagboost) is reset when either a predetermined period of time (T$_{boost}$) since the boost signal (flagboost) occurred has elapsed or the actual value of the frequency (f$_{meas}$) in the electrical supply network is greater than a second predetermined frequency value (f$_{reset}$) which is greater than the first predetermined frequency value (f$_{trigger}$).

8. The method according to any one of Claims 1 to 7, **characterized in that** a transition signal (flag$_{trans}$) is produced when the boost signal (flag$_{boost}$) is reset and before a recovery signal (flag$_{rec}$).

9. The method according to Claim 8, **characterized in that** when the transition signal (flag$_{trans}$) is present, the maximum permissible temporal change of the set value for the generator torque (dN*/dt) is set to a constant value.

10. The method according to Claim 8 or 9, **characterized in that** the transition signal (flag$_{trans}$) is reset and the recovery signal (flag$_{rec}$) is set when the actual value of the rotational speed (n$_{meas}$) rises and the fed-in power (P$_{meas}$) is less than the available power (P$_{aero}$).

11. The method according to any one of Claims 1 to 10, **characterized in that** a ramp function controls the temporal change of the set value for the generator torque (dN*/dt).

12. The method according to any one of Claims 1 to 11, **characterized in that** the recovery signal (flag$_{rec}$) is reset when the set value of the generator torque (N*) lies within a region predefined by the upper limit (N$_{up}$) and the lower limit (N$_{low}$) of the limiter.

**Revendications**

1. Procédé de commande d'une éolienne, qui présente un générateur commandé par le biais d'un convertisseur, dans un mode d'amplification (Boost), lors duquel une puissance électrique injectée dans un réseau d'alimentation électrique est accrue moyennant une temporisation du générateur, dans lequel les étapes suivantes sont prévues :

- la détermination d'une valeur de consigne applicable à un couple de générateur (N*) en fonction d'une valeur réelle d'une vitesse de rotation (n$_{meas}$), **caractérisé par**
- l'établissement de la valeur de consigne déterminée applicable au couple de générateur (N*) sur un générateur par le biais d'un limitateur avec des limites supérieure et inférieure (N$_{up}$, N$_{low}$) pouvant être prédéfinies,
- la production d'un signal d'amplification (flag$_{boost}$) en vue de passer à un mode Boost, durant lequel une puissance accrue est injectée dans le réseau d'alimentation électrique,

- la définition de la valeur de consigne applicable au couple de générateur ($N^*_{boost}$) dans le mode Boost en réponse au signal d'amplification ($flag_{boost}$), lequel couple entraîne une puissance électrique injectée accrue ($P_{freeze} + P_{inc}$) par rapport à une valeur réelle de la puissance injectée (Pfreeze), et

- une limitation d'une variation temporelle de la valeur de consigne applicable au couple de générateur ($dN^*/dt$) dans un mode de rétablissement en réponse à un signal de rétablissement ($flag_{rec}$), qui induit un retour de l'éolienne dans un état stable, approprié au mode de fonctionnement continu.

2.  Procédé selon la revendication 1, **caractérisé en ce que** la variation temporelle maximale admissible de la valeur de consigne applicable au couple de générateur ($dN^*/dt$) lors de la délivrance du signal de rétablissement ($flag_{rec}$) est définie en fonction de la variation temporelle de la vitesse de rotation ($dn/dt$).

3.  Procédé selon la revendication 1 ou 2, **caractérisé en ce que** la variation temporelle maximale admissible de la valeur de consigne du couple de générateur ($dN^*/dt$) lors de la délivrance du signal de rétablissement ($flag_{rec}$) est définie en fonction d'une valeur réelle de la puissance injectée ($P_{meas}$) lors de l'apparition du signal de rétablissement et en fonction d'une valeur réelle de la vitesse de rotation ($n_{meas}$).

4.  Procédé selon la revendication 1 ou 2, **caractérisé en ce que** la variation temporelle maximale admissible de la valeur de consigne du couple de générateur ($dN^*/dt$) lors de la délivrance du signal de rétablissement ($flag_{rec}$) est définie en fonction de la valeur réelle de la vitesse de rotation ($n_{meas}$) et de la puissance disponible ($P_{aero}$).

5.  Procédé selon la revendication 1 ou 2, **caractérisé en ce que** la variation temporelle maximale admissible de la valeur de consigne applicable au couple de générateur ($dN^*/dt$) lors de la délivrance du signal de rétablissement ($flag_{rec}$) est définie en fonction de la variation temporelle de la vitesse de rotation ($dn_{meas}/dt$) par le biais d'un régulateur doté d'un élément P (*à action proportionnelle*) et/ou d'un élément PI (*à action proportionnelle-intégrale)*.

6.  Procédé selon la revendication 5, **caractérisé en ce qu'**un terme constant ($dn^*/dt$) est ajouté à la variation temporelle de la vitesse de rotation ($dn_{meas}/dt$) pour déterminer la variation temporelle maximale admissible de la valeur de consigne applicable au couple de générateur ($dN^*/dt$).

7.  Procédé selon l'une des revendications 1 à 6, **caractérisé en ce que** le signal d'amplification ($flag_{boost}$) est réinitialisé lorsqu'une durée prédéterminée ($T_{boost}$) s'est écoulée depuis l'apparition du signal d'amplification ($flag_{boost}$) ou bien que la valeur réelle de la fréquence ($f_{meas}$) dans le réseau d'alimentation électrique est supérieure à une seconde valeur de fréquence prédéfinie ($f_{reset}$), qui est supérieure à la première valeur de fréquence prédéfinie ($f_{trigger}$).

8.  Procédé selon l'une des revendications 1 à 7, **caractérisé en ce qu'**un signal de transition ($flag_{trans}$) est généré lors de la réinitialisation du signal d'amplification ($flag_{boost}$) et avant un signal de rétablissement ($flag_{rec}$).

9.  Procédé selon la revendication 8, **caractérisé en ce que** la variation temporelle maximale admissible de la valeur de consigne applicable au couple de générateur ($dN^*/dt$) est réglée sur une valeur constante en présence du signal de transition ($flag_{trans}$).

10. Procédé selon la revendication 8 ou 9, **caractérisé en ce que** le signal de transition ($flag_{trans}$) est réinitialisé et le signal de rétablissement ($flag_{rec}$) est délivré lorsque la valeur réelle de la vitesse de rotation ($n_{meas}$) augmente et que la puissance injectée ($P_{meas}$) est inférieure à la puissance disponible ($P_{aero}$).

11. Procédé selon l'une des revendications 1 à 10, **caractérisé en ce qu'**une fonction rampe commande la variation temporelle de la valeur de consigne applicable au couple de générateur ($dN^*/dt$).

12. Procédé selon l'une des revendications 1 à 11, **caractérisé en ce que** le signal de rétablissement ($flag_{rec}$) est réinitialisé lorsque la valeur de consigne du couple de générateur ($N^*$) se situe à l'intérieur d'une plage prédéterminée par la limite supérieure ($N_{up}$) et la limite inférieure ($N_{low}$) du limitateur.

Fig. 1a

Fig. 1b

FIG.2

EP 3 444 939 B1

FIG.3

<u>Fig. 4</u>

Fig. 5

$$\text{FIG.6}$$

18

FIG.7a-c

FIG. 7d

FIG.8 (a,b)

FIG. 8 (c,d)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2532888 A1
- DE 102015208554 A1
- DE 102012224067 A1
- DE 2009014012 A1